(19) 

**Europäisches Patentamt**
**European Patent Office**
**Office européen des brevets**

(11) **EP 1 186 392 B1**

(12) **EUROPEAN PATENT SPECIFICATION**

(45) Date of publication and mention
of the grant of the patent:
**28.03.2007 Bulletin 2007/13**

(51) Int Cl.:
**B29C 44/34** (2006.01)

(21) Application number: **00128625.1**

(22) Date of filing: **28.12.2000**

(54) **Microporous soundproofing material**

Mikroporöses Schallschutzmaterial

Matériau microporeux pour isolation acoustique

(84) Designated Contracting States:
**BE DE FR GB IT**

(30) Priority: **30.08.2000 JP 2000261964**
**08.11.2000 JP 2000340929**

(43) Date of publication of application:
**13.03.2002 Bulletin 2002/11**

(73) Proprietor: **NITTO DENKO CORPORATION**
**Osaka (JP)**

(72) Inventors:
 • **Kanada, Mitsuhiro,**
   **c/o Nitto Denko Corporation**
   **Ibaraki-shi,**
   **Osaka (JP)**
 • **Minamizaki, Yoshihiro,**
   **c/o Nitto Denko Corporation**
   **Ibaraki-shi,**
   **Osaka (JP)**
 • **Yamamoto, Takayuki,**
   **c/o Nitto Denko Corporation**
   **Ibaraki-shi,**
   **Osaka (JP)**
 • **Taruno, Tomohiro,**
   **c/o Nitto Denko Corporation**
   **Ibaraki-shi,**
   **Osaka (JP)**
 • **Banba, Tomohide,**
   **c/o Nitto Denko Corporation**
   **Ibaraki-shi,**
   **Osaka (JP)**

 • **Kitai, Hideyuki,**
   **c/o Nitto Denko Corporation**
   **Ibaraki-shi,**
   **Osaka (JP)**
 • **Matsunaga, Manabu,**
   **c/o Nitto Denko Corporation**
   **Ibaraki-shi,**
   **Osaka (JP)**
 • **Takahashi, Nobuyuki,**
   **c/o Nitto Denko Corporation**
   **Ibaraki-shi,**
   **Osaka (JP)**
 • **Kawaguchi, Yasuhiko,**
   **c/o Nitto Denko Corporation**
   **Ibaraki-shi,**
   **Osaka (JP)**
 • **Tachibana, Katsuhiko,**
   **Nitto Denko Corporation**
   **Ibaraki-shi,**
   **Osaka (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
 **EP-A- 0 610 953**          **EP-A- 0 985 511**
 **WO-A-99/47573**          **US-B1- 6 232 354**

 • **PATENT ABSTRACTS OF JAPAN vol. 1998, no.
   11, 30 September 1998 (1998-09-30) & JP 10
   168215 A (SEKISUI PLASTICS CO LTD), 23 June
   1998 (1998-06-23)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a microporous soundproofing material constituted of a thermoplastic polymer and having excellent characteristic impedance. More particularly, the invention relates to a microporous soundproofing material suitable for use in applications in the field of electronic appliances which require excellent characteristic impedance, cleanness, flexibility, and the ability to conform to various shapes.

It is known that the soundproofing performance of a homogeneous material for use as conventional soundproofing materials is governed by the mass law. Soundproofing properties of a material can hence be improved by increasing the weight of the material. However, in order for a soundproofing material to have greatly improved soundproofing properties, it should have an exceedingly large weight. Namely, the results are an increased cost and an increased weight, leading to impaired workability and handleability.

Inorganic materials are used as the materials constituting soundproofing materials. However, since the inorganic materials themselves are not flexible, the inorganic soundproofing materials are unsuitable for use in soundproofing applications where the soundproofing materials are required to have conformability, cushioning properties, etc. There also is a technique in which soundproofing properties are imparted to a soundproofing material constituted of an organic material by forming cells in inner parts of the material to form a cellular structure or by superposing a fibrous material thereon. In general, when sound waves strike on a cellular expanded material, the vibration of air is propagated to inner parts of the material. This vibration is propagated to the air present in the cells and the sound energy is lost due to the viscosity resistance of the air moving on the inner surfaces of the cells. However, such cellular structures in which the mechanism of soundproofing is based on viscosity resistance have the following problem. Although the soundproofing properties of a material having low flow resistance improve with increasing material thickness, a material having high flow resistance can have desired soundproofing properties only when it has a thickness increased to or above a given value.

Expanded materials are used in various parts for the purposes of waterproofing, airproofing, heat insulation, soundproofing, cushioning, etc. However, there are cases where such expanded materials are required to have flame retardancy depending on the parts to which the expanded materials are applied, as in electronic appliances. Because of this, various investigations are being made on the impartation of flame retardancy to expanded materials.

A general flame retardant for expanded materials comprises a combination of aluminum hydroxide and chlorinated polyethylene, chlorinated paraffin, decabromodiphenyl ether, antimony trioxide, or the like, according to the material constituting the expanded materials. However, if a chlorinated flame retardant is used, the expanded material containing it generates chlorine ions, which are causative of corrosion of electronic appliances. Use of decabromodiphenyl ether is thought to be undesirable from the standpoint of environmental conservation because it may generate dioxins upon incineration. Furthermore, antimony trioxide is a substance which imposes a load on the environment and is harmful, and use thereof is hence undesirable.

Among the methods generally used for forming cellular expanded materials such as those described above are a physical expansion technique and a chemical expansion technique. The physical expansion is a technique in which a polymer is impregnated with a low-boiling liquid hydrocarbon or chlorofluorocarbon and then heated to thereby gasify the low-boiling substance infiltrated in the polymer and expand the polymer while utilizing the expanding force of the gasified substance. The chemical expansion is a technique in which a resin composition comprising a polymer containing a heat-decomposable blowing agent is heated to decompose the heat-decomposable blowing agent and thereby form cells by means of the gas generated by the decomposition. However, the physical expansion technique has a drawback that the substance used as a blowing agent may be flammable and toxic and there is a fear that the blowing agent may exert adverse influences on the environment, such as ozonosphere depletion. On the other hand, the chemical expansion technique has a drawback that since the blowing gas leaves a residue in the expanded material, there is a problem that a corrosive gas and impurities contained in the blowing gas may cause fouling in electronic appliances for which high nonfouling properties are required. Incidentally, it is difficult to form a finely cellular structure with either of the physical and chemical expansion techniques and, in particular, it is thought that fine cells of 300 $\mu$m or smaller cannot be formed therewith.

Recently, a technique for obtaining an expanded material having a finely cellular structure has been proposed, which comprises dissolving an inert gas in a polymer at a high pressure and then abruptly lowering the pressure to form a foamed structure. For example, JP-A-6-322168 (the term "JP-A" as used herein means an "unexamined published Japanese patent application") discloses a method which comprises introducing a thermoplastic polymer into a pressure vessel, subsequently introducing a highly pressurized gas thereinto while heating the contents to the softening point of the polymer, and then lowering the pressure to form cells. In this method, however, the expanded material obtained tends to have a large cell diameter because the polymer is in a molten state at the time of decompression and is hence apt to expand. In addition, since a polymer having a glass transition temperature of 150°C or higher is usually used, the expanded material has insufficient flexibility at room temperature. Consequently, the expanded material produced by the conventional technique described above is unsuitable for use as a soundproofing material for electronic appliances from the standpoints of conformability and cushioning properties. JP-A-10-168215 discloses a process for producing an expanded thermoplastic polyurethane sheet which comprises impregnating a sheet of a thermoplastic polyurethane with an inorganic gas under pressure and then heating the sheet to expand the same. However, there are no descriptions or suggestions about a soundproofing material in either of these patent documents.

WO 99/47573 discloses a low density, microcellular thermoplastic elastomeric foam obtained by a process comprising the step of mixing a thermoplastic elastomeric composition with a supercritical fluid in a first extruder at a first temperature and pressure; and extruding the mixture across a die having a pressure and temperature change to a second temperature and pressure, thereby causing foaming the thermoplastic elastomer. The thermoplastic resin composition is selected from the group consisting of styrenic block copolymers, thermoplastic vulcanizates, styrene-ethylenebutylene-styrene, and a thermoplastic vulcaniziate having a Shore A hardness of at least 73.

US-A-6,232,354 relates to a microcellular polymer foam obtained by a process comprising the steps of (a) saturating a consolidated polymer shape with an inert gas at an elevated pressure above 800 psi and at temperature above the transition temperature of the polymer; (b) fully or partially releasing the pressure; and (c) quenching the polymer shape to a temperature below the glass transition temperature of the polymer at a rate sufficient to produce a polymeric microcellular crystalline foam comprised of bubbles having walls wherein the crystals are aligned within the walls of the bubbles.

Accordingly one object of the invention is to provide a soundproofing material which has a high characteristic impedance, is clean and lightweight, and has excellent flexibility.

Another object of the invention is to provide a soundproofing material which, even when thin, can have high soundproofing properties.

Still another object of the invention is to provide a soundproofing material which has high soundproofing properties even when thin and has excellent flame retardancy.

The present inventors made various investigations on the structures and constituent materials of soundproofing materials and others in order to accomplish those objects. As a result, they have found that a cellular expanded material in which the cells are basically closed cells can have excellent soundproofing properties even when thin, in the case where the cell diameter is within a specific range and the relative density of the expanded material is not higher than a specific value. They have further found that such an expanded material is obtained by impregnating a specific polymer with an inert gas at a high pressure and then decompressing the impregnated polymer.

The invention provides a microporous soundproofing material constituted of an expanded material formed through the step of impregnating a thermoplastic elastomer with an inert gas at a high pressure and then decompressing the impregnated elastomer. This microporous soundproofing material includes: (i) a microporous soundproofing material which is constituted of an expanded material formed through the step of impregnating an unexpanded molding comprising a thermoplastic elastomer with an inert gas at a high pressure and then decompressing the impregnated molding; and (ii) a microporous soundproofing material which is constituted of an expanded material formed by impregnating a molten thermoplastic elastomer with an inert gas at a high pressure and then subjecting the impregnated elastomer to molding simultaneously with decompression. The expanded material may be further heated after the decompression.

The thermoplastic polymer for use as a raw material for the expanded material in the invention is not particularly limited as long as it is a polymer showing thermoplasticity and capable of being impregnated with a highly pressurized gas. Examples of such a thermoplastic polymer include olefin polymers such as low-density polyethylene, medium-density polyethylene, high-density polyethylene, linear low-density polyethylene, polypropylene, ethylene/propylene copolymers, copolymers of ethylene or propylene with one or more other α-olefins, and copolymers of ethylene with one or more comonomers selected from vinyl acetate, acrylic acid, acrylic esters, methacrylic acid, methacrylic esters, vinyl alcohol, and the like; styrene polymers such as polystyrene; polyamides; poly(amide-imide)s; polyurethanes; polyimides; and polyetherimides.

The thermoplastic polymer includes a thermoplastic elastomer which has properties of a rubber at ordinary temperature but shows thermoplasticity at high temperatures. Examples of such a thermoplastic elastomer include olefin elastomers such as ethylene/propylene copolymers, ethylene/propylene/diene copolymers, ethylene/vinyl acetate copolymers, polybutene, polyisobutylene, and chlorinated polyethylene; styrene elastomers such as styrene/butadiene/styrene copolymers, styrene/isoprene/styrene copolymers, styrene/isoprene/butadiene/styrene copolymers, and hydrogenated polymers derived from these; thermoplastic polyester elastomers; thermoplastic polyurethane elastomers; and thermoplastic acrylic elastomers. Since these thermoplastic elastomers have a glass transition temperature not higher than room temperature (e.g., not higher than 20°C), they give a soundproofing material having exceedingly high flexibility and conformability.

Such thermoplastic polymers can be used alone or as a mixture of two or more thereof. As the raw material (thermoplastic polymer) for the expanded material a mixture of a thermoplastic elastomer and a thermoplastic polymer which is not a thermoplastic elastomer is used.

Examples of the mixture of a thermoplastic elastomer and a thermoplastic polymer which is not a thermoplastic elastomer include a mixture of an olefin elastomer, e.g., an ethylene/propylene copolymer, and an olefin polymer, e.g.,

polypropylene. In the case of using a mixture of a thermoplastic elastomer and a thermoplastic polymer which is not a thermoplastic elastomer, the former and the latter are mixed in a proportion of, for example, about from 1/99 to 99/1 (preferably about from 10/90 to 90/10, more preferably about from 20/80 to 80/20).

The inert gas for use in the invention is not particularly limited as long as the thermoplastic polymer can be impregnated therewith. Examples thereof include carbon dioxide, nitrogen gas, and air. These gases may be used as a mixture of two or more thereof. Preferred of these is carbon dioxide because it can be infiltrated into the thermoplastic polymer as a raw material for the expanded material in a large amount and at a high rate.

The inert gas with which the thermoplastic polymer is being impregnated is preferably in a supercritical state. A gas in a supercritical state has enhanced solubility in polymers and can be infiltrated thereinto in a high concentration. Many cell nuclei generate upon abrupt decompression after the impregnation due to the gas infiltration in a high concentration as described above, and grow into cells. These cells are present at a higher density than in conventional expanded materials having the same porosity as the thus-produced expanded material. Namely, finer cells can be obtained. Incidentally, the critical temperature and critical pressure of carbon dioxide are 31°C and 7.4 MPa, respectively.

Additives may be added according to need to the thermoplastic polymer in forming the expanded material. The additives are not particularly limited in kind, and various additives ordinarily used for foam molding can be employed. Examples of such additives include cell nucleators, crystal nucleators, plasticizers, lubricants, colorants, ultraviolet absorbers, antioxidants, fillers, reinforcements, flame retardants, and antistatic agents. The amount of such additives to be added can be suitably selected in a range in which the additives do not adversely influence cell formation, etc. The additives can be added in an amount used for the molding of ordinary thermoplastic polymers including thermoplastic elastomers.

The expanded material is formed through a gas impregnation step in which a thermoplastic polymer is impregnated with an inert gas at a high pressure and a decompression step in which the pressure is lowered after the gas impregnation step to expand the resin, and optionally through a heating step in which the cells are grown by heating. This process may be conducted in such a manner that an unexpanded molding produced beforehand is impregnated with an inert gas, or that a molten thermoplastic polymer is impregnated with an inert gas under pressure and then subjected to molding simultaneously with decompression. Those steps may be conducted either batchwise or continuously.

In a batch process, an expanded material can be formed, for example, in the following manner. First, an extruder such as a single- or twin-screw extruder is used to extrude a thermoplastic polymer such as a polyolefin resin or thermoplastic elastomer to thereby form an unexpanded molding (e.g., a resin sheet for forming an expanded material therefrom). Alternatively, a kneading machine equipped with roller, cam, kneader, or Banbury type blades is used to evenly knead a thermoplastic polymer such as a polyolefin resin or thermoplastic elastomer, and the kneaded thermoplastic polymer is press-molded with a hot platen press to form an unexpanded molding (e.g., a resin sheet for forming an expanded material therefrom) comprising the thermoplastic polymer as the base resin. The unexpanded molding obtained is placed in a pressure vessel, and a highly pressurized inert gas is introduced thereinto to impregnate the unexpanded molding with the inert gas. This unexpanded molding is not particularly limited in shape and may be in the form of a roll, plate, or the like. The highly pressurized gas may be introduced continuously or discontinuously. At the time when the molding has been sufficiently impregnated with the highly pressurized inert gas, the molding is released from the pressure (usually, the pressure is lowered to atmospheric pressure) to generate cell nuclei in the base resin. The cell nuclei may be allowed to grow at room temperature or may be grown by heating according to need. For the heating can be used a known or ordinarily used means such as, e.g., a water bath, oil bath, heated roller, hot-air oven, far infrared, near infrared, or microwave. After the cells are thus grown, the molding is rapidly cooled with cold water, etc. to fix the shape.

On the other hand, in a continuous process, an expanded material can be formed, for example, in the following manner. A thermoplastic polymer is kneaded with an extruder such as a single- or twin-screw extruder. During the kneading, a highly pressurized inert gas is injected into the kneader to sufficiently impregnate the thermoplastic polymer with the gas. Thereafter, the impregnated polymer is extruded to release it from the pressure (usually, the pressure is lowered to atmospheric pressure) to conduct expansion and molding simultaneously. In some cases, the resultant molding is heated to grow the cells. Thereafter, the molding is rapidly cooled with cold water, etc. to fix the shape.

In the gas impregnation step, the pressure is, for example, 6 MPa or higher (e.g., about from 6 to 100 MPa), preferably 8 MPa or higher (e.g., about from 8 to 100 MPa). If the pressure is lower than 6 MPa, cell growth proceeds excessively during expansion and this tends to result in too large a cell diameter and a reduced soundproofing effect. The reason for this is as follows. When the pressure is too low, the gas impregnation amount is relatively small as compared with the case of using higher pressures and the rate of cell nucleus formation is reduced, resulting in a smaller number of cell nuclei. Consequently, the gas amount per cell increases rather than decreases, resulting in an exceedingly large cell diameter. Furthermore, in the range of pressures lower than 6 MPa, even a slight change in impregnation pressure results in considerable changes in cell diameter and cell density, making it difficult to regulate the cell diameter and cell density.

The temperature in the gas impregnation step varies depending on the kinds of the inert gas and thermoplastic polymer used, etc., and can be selected in a wide range. However, from the standpoint of operating efficiency, etc., the temperature is, for example, about from 10 to 350°C. For example, in the case where an unexpanded molding in a sheet or similar form is impregnated with an inert gas in a batch process, the impregnation temperature is generally about from 10 to 200°C, preferably about from 40 to 200°C. In the case where a gas-impregnated molten polymer is extruded to simultaneously conduct expansion and molding in a continuous process, the impregnation temperature is generally about from 60 to 350°C. When carbon dioxide is used as the inert gas, the temperature during impregnation is preferably 32°C or higher, more preferably 40°C or higher, so as to keep the inert gas in a supercritical state.

In the decompression step, the rate of decompression is not particularly limited but is preferably about from 5 to 300 MPa/sec so as to obtain uniform fine cells. In the heating step, the heating temperature is, for example, about from 40 to 250°C, preferably about from 60 to 250°C.

The expanded material thus obtained has exceedingly fine cells and a high cell density. For example, the expanded material has an average cell diameter of generally about from 0.1 to 300 $\mu$m, preferably about from 0.1 to 50 $\mu$m, more preferably about from 0.1 to 20 $\mu$m, and a cell density of generally about from $10^5$ to $10^{14}$ cells per cm$^3$, preferably about from $10^8$ to $10^{14}$ cells per cm$^3$, more preferably about from $3 \times 10^8$ to $10^{14}$ cells per cm$^3$. In this expanded material, the cells are basically closed cells. However, the expanded material may locally have cells having broken walls. The cells are evenly distributed throughout the expanded material, especially in the thickness direction. When this expanded material having such a cellular structure is used as a soundproofing material, sound energy incident on the soundproofing material is reflected by cell/polymer interfaces exceedingly many times, so that part of the sound energy is lost in the cells and the expanded material shows highly improved soundproofing properties.

A preferred expanded material according to the invention has a relative density [(density of the expanded material)/(density of the unexpanded material)] of generally 0.6 or lower, preferably 0.3 or lower (e.g., about 0.002 to 0.3), more preferably 0.25 or lower (e.g., about 0.005 to 0.25). A more preferred expanded material according to the invention has a compressive load at 50% compression (hereinafter sometimes referred to as "50%-compression load") of generally 20 N/cm$^2$ or lower (e.g., about 0.1 to 20 N/cm$^2$), preferably 15 N/cm$^2$ or lower (e.g., about 0.3 to 15 N/cm$^2$). This expanded material has exceedingly high flexibility.

The average cell diameter, relative density, and 50%-compression load can be regulated by suitably selecting conditions according to the kind of the inert gas used and that of the thermoplastic polymer or thermoplastic elastomer used. Examples of such conditions include operating conditions in the gas impregnation step, such as temperature, pressure, and time, operating conditions in the decompression step, such as the rate of decompression, temperature, and pressure, and heating temperature in the heating conducted after decompression.

Soundproofing properties of a material (soundproofing material) are generally expressed in terms of the ratio of the characteristic impedance of the material, $Z_c^{mat.}$, to the characteristic impedance of air, $Z_c$ (=$\rho^{air} \times c^{air}$). Namely, the soundproofing properties are expressed by $Z_c^{mat.}/Z_c$, i.e. , $Z_c^{mat.}/ (\rho^{air} \times c^{air})$ (unit : dimensionless).

The unit of each physical value is as follows.

$Z_c^{mat.}$ : kg/s·m$^2$
$Z_c$ : kg/s·m$^2$
$\rho^{air}$ (density of air): kg/m$^3$
$c^{air}$ (rate of air (sound) propagation): m/s
$Z_c^{mat.}/ (\rho^{air} \times C^{aiz})$: dimensionless

In the microporous soundproofing material of the invention, the ratio of the characteristic impedance of the material to the characteristic impedance of air [$Z_c^{mat.}/(\rho^{air} \times c^{air})$] is, for example, about from 3 to 50(-), preferably about from 5 to 50(-).

A flame retardant may be used in the invention for imparting flame retardancy to the soundproofing material. Various flame retardants can be used without particular limitations. Preferred examples thereof include hydrated metal compounds and bromine compounds. Especially preferred flame retardants are of the type which releases water upon heating to quench flames. Such flame retardants include hydrated metal compounds. Examples of the hydrated metal compounds include aluminum hydroxide and magnesium hydroxide. Such hydrated metal compounds may have been surface-treated.

Such flame retardants can be used alone or in combination of two or more thereof. Polyhedral Composite Metal Hydroxide:

In the invention, a composite metal hydroxide represented by the following formula (1) is optimal among the hydrated metal compounds for use as flame retardants.

$$m (M_aO_b) \cdot n (Q_dO_c) \cdot cH_2O \qquad (1)$$

In formula (1), M and Q represent different metal elements and Q is a metal element belonging to a group selected from Groups IVa, Va, VIa, VIIa, VIII, Ib, and IIb of the periodic table; and m, n, a, b, c, d, and e may be the same or different and each is a positive number.

By using the polyhedral composite metal hydroxide represented by formula (1) as a flame retardant in combination with the expanded material described above, a soundproofing material can be obtained which has excellent flame retardancy while retaining intact properties of the expanded material (e.g., finely cellular properties, soundproofing properties, and flexibility).

In the polyhedral composite metal hydroxide represented by formula (1), examples of M representing a metal element include aluminum (Al), magnesium (Mg), calcium (Ca), nickel (Ni), cobalt (Co), tin (Sn), zinc (Zn), copper (Cu), iron (Fe), titanium (Ti), and boron (B). Preferred of these is magnesium. M may represent a single metal element or represent two or more metal elements.

Q, which represents another metal element in the polyhedral composite metal hydroxide represented by formula (1), is a metal belonging to a group selected from Groups IVa, Va, VIa, VIIa, VIII, Ib, and IIb of the periodic table. Examples thereof include iron (Fe), cobalt (Co), nickel (Ni), palladium (Pd), copper (Cu), and zinc (Zn). Preferred of these are nickel and zinc. Q may represent a single metal element or represent two or more metal elements.

Such a composite metal hydroxide having a polyhedral crystalline form can be produced by a known method (see, for example, JP-A-2000-53875). For example, a composite metal hydroxide which has sufficiently grown in the thickness direction (c-axis direction) as well as in the length and width directions and has a desired polyhedral shape, e.g., a nearly dodecahedral, nearly octahedral, or nearly tetrahedral shape, can be obtained by regulating various conditions in a process for producing a composite metal hydroxide.

An especially preferred polyhedral composite metal hydroxide is one having a nearly octahedral crystalline form. The polyhedral composite metal hydroxide preferably has an aspect ratio of generally about from 1 to 8, preferably about from 1 to 7, more preferably about from 1 to 4. The term "aspect ratio" as used herein for a composite metal hydroxide means the ratio of the length of the minor axis thereof to the length of the major axis thereof. The polyhedral composite metal hydroxide has an average particle diameter of generally about from 0.05 to 10 $\mu$m, preferably about from 0.1 to 6 $\mu$m. The average particle diameter thereof can be determined, for example, with a laser type particle size analyzer. If a polyhedral composite metal hydroxide having an aspect ratio higher than 8 or an average particle diameter larger than 10 $\mu$m is used, it is difficult to obtain a highly expanded resin foam.

Typical examples of the polyhedral composite metal hydroxide described above include $sMgO \cdot (1-s)NiO \cdot cH_2O$ [$0<s<1, 0<c\leq1$], $sMgO \cdot (1-s)ZnO \cdot cH_2O$ [$0<s<1, 0<c\leq1$], and $sAl_2O_3 \cdot (1-s) Fe_2O_3 \cdot cH_2O$ [$0<s<1, 0<c\leq3$]. Especially preferred of these are composite metal hydroxides represented by $sMgO \cdot (1-s) Q^1O \cdot cH_2O$ [wherein $Q^1$ represents Ni or Zn, and $0<s<1$ and $0<c\leq1$], such as magnesium oxide/nickel oxide hydrates and magnesium oxide/zinc oxide hydrates.

A bromine compound, a composite metal hydroxide in a thin platy form, or the like can be used in combination with the polyhedral composite metal hydroxide in the invention. The proportion of the polyhedral composite metal hydroxide represented by formula (1) in the flame retardant is, for example, about from 10 to 100% by weight, preferably about from 30 to 100% by weight, based on the whole flame retardant. If the proportion of the polyhedral composite metal hydroxide is lower than 10% by weight, it is difficult to obtain a highly expanded resin foam.

Examples of the bromine compound include tetrabromobisphenol A (TEA), TBA-bis (2,3-dibromopropyl ether), TBA-bis(allyl ether), hexabromocyclododecane, tribromophenol, ethylenebistetrabromophthalimide, dibromoethyldibromocyclohexane, tetrabromophthalic anhydride, ethylenebisdibromonorbornenedicarboximide, vinyl bromide, tetrabromocyclooctane, and ethylenebispentabromodiphenyl.

Another embodiment of the soundproofing material of the invention is a microporous soundproofing material which comprises the above-described expanded material containing a flame retardant and has flame retardancy (hereinafter sometimes referred to as "flame-retardant microporous soundproofing material"). This flame-retardant microporous soundproofing material can be produced by mixing a raw material (thermoplastic polymer) for an expanded material with a flame retardant and subjecting the mixture to an expansion step to form an expanded material containing the flame retardant in inner parts thereof. More specifically, an expanded material for use as a flame-retardant microporous soundproofing material can be formed through a gas impregnation step in which a thermoplastic polymer containing a flame retardant is impregnated with an inert gas at a high pressure and a decompression step in which the pressure is lowered after the gas impregnation step to expand the resin, and optionally through a heating step in which the cells are grown by heating. This process may, of course, be conducted in such a manner that an unexpanded molding comprising a thermoplastic polymer containing a flame retardant is produced beforehand and this molding is impregnated with an inert gas and then decompressed to form the target expanded material, or that a molten thermoplastic polymer containing a flame retardant is impregnated with an inert gas under pressure and then subjected to molding simultaneously with decompression.

It is important that the flame-retardant microporous soundproofing material of the invention should be constituted of a microporous expanded material containing a flame retardant in inner parts thereof, as described above.

The content of the flame retardant (especially, the polyhedral composite metal hydroxide described above) is generally about 10 to 70% by weight, preferably about 25 to 65% by weight, based on the whole expanded material (e.g., the total amount of the thermoplastic polymer and the flame retardant). Too low contents thereof result in an insufficient flame-retarding effect, while too high contents thereof result in difficulties in obtaining a highly expanded material.

The expanded material according to the invention may be used alone as a soundproofing material without combining it with other materials. The expanded material may be processed so as to have a shape conforming to the apparatus to which the soundproofing material is to be applied. Furthermore, a structure produced by forming a pressure-sensitive adhesive layer on one or each side of the expanded material or by attaching a molded object such as, e.g., a film or sheet to the expanded material may be used as a soundproofing material. The pressure-sensitive adhesive layers may be used in combination with films or the like.

Since the microporous soundproofing material of the invention has exceedingly fine cells and a low relative density, it not only has a low 50%-compression load and is flexible, but has improved soundproofing properties because the sound energy incident thereon is reflected by cell/polymer interfaces exceedingly many times and thus partly lost in the cells.

Furthermore, the soundproofing material of the invention has excellent flexibility because the expanded material is constituted of a thermoplastic polymer, e.g., a thermoplastic elastomer. Since this expanded material is produced with an inert gas, e.g., carbon dioxide, as a blowing agent, it neither generates a harmful substance nor contains a residual fouling substance unlike expanded materials produced by the conventional physical expansion technique and chemical expansion technique. Namely, the expanded material according to the invention is clean. Consequently, the soundproofing material of the invention can be advantageously used especially in electronic appliances and the like.

The soundproofing material of the invention has a high characteristic impedance, is clean and lightweight, and has excellent flexibility. The soundproofing material of the invention can have high soundproofing properties even when thin.

In addition, since the soundproofing material has excellent flame retardancy, it can be applied to parts where flame retardancy is required. Namely, the soundproofing material of the invention can be used in a wide range of soundproofing applications.

The soundproofing material containing the polyhedral composite metal hydroxide described above does not contain a chlorinated resin or antimony compound flame retardant. It is hence highly safe and less imposes a load on the environment.

The invention will be explained below in more detail by reference to Examples, but the invention should not be construed as being limited by these Examples in any way. The relative density, 50%-compression load, and average cell diameter of an expanded material were determined by the following methods.

(Relative Density)

Relative density was determined using the following equation.

$$\text{Relative density (-) = (Density of the expanded material)} \div$$
$$\text{(density of the unexpanded sheet)}$$

50% Compression Load:

Several sheets of test piece cut into a disk form having a diameter of 30 mm were stacked up so as to result in a total thickness of about 25 mm. The test pieces stacked were compressed at a rate of 10 mm/min, and the stress at 50% compression was measured. This found value of stress was converted to a value per unit area ($cm^2$), and the converted value was taken as 50%-compression load.

Average Cell Diameter:

An expanded sheet produced was frozen in liquid nitrogen and broken, and a resultant section was examined with a scanning electron microscope (SEM; Hitachi-570) at an accelerating voltage of 10 kV. From an image obtained, the average cell diameter was determined through image processing.

Illustrating EXAMPLE 1

An SIS (styrene/isoprene/styrene block copolymer) (Quintac 3433N, manufactured by Nippon Zeon Co., Ltd.)

was kneaded with a batch kneader (Labo Plastomill, manufactured by Toyo Seiki Seisaku-Sho, Ltd.) at a temperature of 160°C, and then formed into a sheet having a thickness of 3 mm and a diameter of 100 mm with a hot press heated at 160°C. This sheet was placed in a pressure vessel having a capacity of 100 ml, and the pressure vessel was set at 40°C. After the temperature had become stable, supercritical carbon dioxide having a pressure of 15 MPa and a temperature of 40°C was introduced into the vessel. After the pressure and temperature inside the vessel had become stable, those conditions were maintained for 60 minutes to thereby impregnate the polymer with carbon dioxide. Thereafter, the pressure inside the vessel was lowered to atmospheric pressure at a rate of 100 MPa/sec. The polymer was then taken out of the pressure vessel and rapidly immersed in an 80°C water bath to accelerate expansion. The expanded material thus obtained had an average cell diameter of 11.3 $\mu$m and a cell density of $6.7 \times 10^8$ cells per $cm^3$. The cells were closed cells and were evenly distributed in the thickness direction.

Illustrating EXAMPLE 2

A thermoplastic polyurethane (E660MZAA, manufactured by Nippon Miractran Co., Ltd.) was melt-kneaded with a batch kneader (Labo Plastomill, manufactured by Toyo Seiki Seisaku-Sho, Ltd.) at a temperature of 160°C, and then formed into a sheet having a thickness of 3 mm and a diameter of 100 mm with a hot press heated at 160°C. This sheet was placed in a pressure vessel having a capacity of 100 ml, and the pressure vessel was set at 40°C. Supercritical carbon dioxide having a pressure of 25 MPa and a temperature of 40°C was introduced into the vessel. After the pressure and temperature inside the vessel had become stable, those conditions were maintained for 90 minutes to thereby impregnate the polymer with carbon dioxide. Thereafter, the pressure inside the vessel was lowered to atmospheric pressure at a rate of 100 MPa/sec to obtain an expanded material. The expanded material obtained had an average cell diameter of 8.0 $\mu$m and a cell density of $3.6 \times 10^6$ cells per $cm^3$. The cells were closed cells and were evenly distributed in the thickness direction.

COMPARATIVE EXAMPLE 1

A polyurethane foam (Inoac SC) obtained by a general chemical expansion technique was evaluated as Comparative Example 1. This expanded material had an average cell diameter of 480 $\mu$m and a cell density of $2.9 \times 10^3$ cells per $cm^3$.

EVALUATION TEST (Evaluation of Acoustic Property)

The expanded materials obtained in the Examples and Comparative Example given above were examined for the characteristic impedance of the material to determine the ratio of this characteristic impedance to the characteristic impedance of air $[Z_c^{mat.}/(\rho^{air} \times c^{air})]$ (unit: dimensionless). The soundproofing properties of each expanded material were evaluated in terms of this ratio. The measurement of characteristic impedance was made with a two-microphone impedance meter at a frequency of 2,000 Hz. In each found value, the decimal fraction was neglected and only the whole number was used. The results obtained are shown in Table 1.

Table 1

| | Cell diameter ($\mu$m) | Cell density (cells/$cm^3$) | $Z_c^{mat.}/(\rho^{air} x c^{air})$ |
|---|---|---|---|
| Example 1* | 11.3 | $6.7 \times 10^8$ | 10.4 |
| Example 2* | 8.0 | $3.6 \times 10^8$ | 17.9 |
| Comparative Example 1 | 480 | $2.9 \times 10^3$ | 2.7 |
| *Illustrating Examples | | | |

As apparent from Table 1, the expanded materials obtained in the Examples had a higher characteristic impedance than the expanded material of the Comparative Example. Table 1 further shows that the expanded materials having a small cell diameter and a high cell density had a high characteristic impedance.

EXAMPLE 3

Fifty parts by weight of polypropylene having a density of 0.9 g/$cm^3$ and a 230°C melt flow rate of 4 was kneaded together with 50 parts by weight of an ethylene/propylene elastomer having a JIS-A hardness of 69 by means of a kneading machine equipped with roller type blades (trade name "Labo Plastomill", manufactured by Toyo Seiko Seisaku-Sho, Ltd.) at a temperature of 180°C. Subsequently, the resultant mixture was formed into a sheet having a thickness of 0.5 mm and a diameter of 80 mm with a hot platen press heated at 180°C.

This sheet was placed in a pressure vessel and held in a 150°C carbon dioxide gas atmosphere for 10 minutes at an elevated pressure of 15 MPa to thereby impregnate the sheet with carbon dioxide. After 10 minutes, the pressure was abruptly lowered to obtain an expanded material consisting of the olefin polymers. This expanded material had a relative density of 0. 026, an average cell diameter of 124 $\mu$m, and a 50%-compression load of 0.78 N/cm$^2$. The results of acoustic property evaluation of this expanded material are shown in Table 2.

EXAMPLE 4

Fifty parts by weight of polypropylene having a density of 0.9 g/cm$^3$ and a 230°C melt flow rate of 4 was kneaded together with 50 parts by weight of an ethylene/propylene elastomer having a JIS-A hardness of 69 by means of a kneading machine equipped with roller type blades (trade name "Labo Plastomill", manufactured by Toyo Seiko Seisaku-Sho, Ltd.) at a temperature of 180°C. Subsequently, the resultant mixture was formed into a sheet having a thickness of 0.5 mm and a diameter of 80 mm with a hot platen press heated at 180°C.

This sheet was placed in a pressure vessel and held in a 150°C carbon dioxide gas atmosphere for 10 minutes at an elevated pressure of 20 MPa to thereby impregnate the sheet with carbon dioxide. After 10 minutes, the pressure was abruptly lowered to obtain an expanded material consisting of the olefin polymers. This expanded material had a relative density of 0.029, an average cell diameter of 110 $\mu$m, and a 50%-compression load of 2.16 N/cm$^2$. The results of acoustic property evaluation of this expanded material are shown in Table 2.

Illustrating EXAMPLE 5

A thermoplastic polyurethane (trade name "E660MZAA", manufactured by Nippon Miractran Co., Ltd.) was melt-kneaded at 160°C with a batch kneader (trade name "Labo Plastomill", manufactured by Toyo Seiki Seisaku-Sho, Ltd.), and then formed into a sheet having a thickness of 2 mm and a diameter of 80 mm with a hot press heated at 160°C.

This sheet was placed in a pressure vessel and held in a 70°C carbon dioxide gas atmosphere for 90 minutes at an elevated pressure of 10 MPa to thereby impregnate the sheet with carbon dioxide. After 10 minutes, the pressure was abruptly lowered and the sheet was heated by immersion in 80°C water for 30 seconds to obtain an expanded material consisting of the thermoplastic polyurethane. This expanded material had a relative density of 0.131, an average cell diameter of 150 $\mu$m, and a 50%-compression load of 9.90 N/cm$^2$. The results of acoustic property evaluation of this expanded material are shown in Table 2.

Illustrating EXAMPLE 6

A thermoplastic polyurethane (trade name "E660MZAA", manufactured by Nippon Miractran Co., Ltd.) was melt-kneaded at 160°C with a batch kneader (trade name "Labo Plastomill", manufactured by Toyo Seiki Seisaku-Sho, Ltd.), and then formed into a sheet having a thickness of 2 mm and a diameter of 80 mm with a hot press heated at 160°C.

This sheet was placed in a pressure vessel and held in a 60°C carbon dioxide gas atmosphere for 60 minutes at an elevated pressure of 10 MPa to thereby impregnate the sheet with carbon dioxide. After 10 minutes, the pressure was abruptly lowered and the sheet was heated by immersion in 80°C water for 30 seconds to obtain an expanded material consisting of the thermoplastic polyurethane.

This expanded material had a relative density of 0.217, an average cell diameter of 75 $\mu$m, and a 50% compression load of 10.6 N/cm$^2$. The results of acoustic property evaluation of this expanded material are shown in Table 2.

COMPARATIVE EXAMPLE 2

A thermoplastic polyurethane (trade name "E660MZAA", manufactured by Nippon Miractran Co., Ltd.) was melt-kneaded at 160°C with a batch kneader (trade name "Labo Plastomill", manufactured by Toyo Seiki Seisaku-Sho, Ltd.), and then formed into a sheet having a thickness of 2 mm and a diameter of 80 mm with a hot press heated at 160°C.

This sheet was placed in a pressure vessel and held in a 40°C carbon dioxide gas atmosphere for 90 minutes at an elevated pressure of 20 MPa to thereby impregnate the sheet with carbon dioxide. After 90 minutes, the pressure was abruptly lowered to obtain an expanded material consisting of the thermoplastic polyurethane.

This expanded material had a relative density of 0.329, an average cell diameter of 4 $\mu$m, and a 50% compression load of 22.04 N/cm$^2$. The results of acoustic property evaluation of this expanded material are shown in Table 2.

COMPARATIVE EXAMPLE 3

Polyurethane foam Inoac Type SC, produced by a general chemical expansion technique, had a relative density of 0.071, a cell diameter of 480 $\mu$m, and a 50%-compression load of 0.70 N/cm$^2$. The results of acoustic property evaluation of this sample are shown in Table 2.

EVALUATION OF ACOUSTIC PROPERTY

The expanded materials obtained in the Examples and Comparative Examples given above were examined for the characteristic impedance of the material to determine the ratio of this characteristic impedance to the characteristic impedance of air [$Z_c^{mat.}/(\rho^{air} \times C^{air})$] (unit: dimensionless). The soundproofing properties of each expanded material were evaluated in terms of this ratio.

The measurement of characteristic impedance was made with a two-microphone impedance meter at a frequency of 2,000 Hz. In each found value, the decimal fraction was neglected and only the whole number was used. The results obtained are shown in Table 2.

Table 2

|  | $Z_c^{mat.}/(\rho^{air}xC^{air})$ |
|---|---|
| Example 3 | 5.82 |
| Example 4 | 6.62 |
| Example 5* | 12.54 |
| Example 6* | 12.82 |
| Comparative Example 2 | $Z_c^{mat.}$ was unable to be measured because of value characteristic of solid |
| Comparative Example 3 | 2.66 |
| *Illustrating Example | |

As apparent from Table 2, the expanded materials obtained in the Examples had a higher characteristic impedance than the expanded materials of the Comparative Examples. Table 2 further shows that the expanded materials having a small cell diameter and a high cell density had a high characteristic impedance.

EXAMPLE 7

Fifty parts by weight of polypropylene having a density of 0.9 g/cm$^3$ and a 230°C melt flow rate of 4 was kneaded together with 50 parts by weight of an ethylene/propylene elastomer having a JIS-A hardness of 69 and 100 parts by weight of polyhedral MgO·ZnO·H$_2$O (average particle diameter, 1.0 $\mu$m; aspect ratio, 4) by means of Labo Plastomill equipped with roller type blades (manufactured by Toyo Seiko Seisaku-Sho, Ltd.) at a temperature of 180°C. Subsequently, the resultant mixture was formed into a sheet having a thickness of 0.5 mm and a diameter of 80 mm with a hot platen press heated at 180°C. This sheet was placed in a pressure vessel and held in a 150°C carbon dioxide gas atmosphere for 10 minutes at an elevated pressure of 15 MPa to thereby impregnate the sheet with carbon dioxide. After 10 minutes, the pressure was abruptly lowered to obtain an expanded material comprising the olefin polymers. This expanded material had a relative density of 0.04, an average cell diameter of 175 $\mu$m, and a 50%-compression load of 2.22 N/cm$^2$.

EXAMPLE 8

Fifty parts by weight of polypropylene having a density of 0.9 g/cm$^3$ and a 230°C melt flow rate of 4 was kneaded together with 50 parts by weight of an ethylene/propylene elastomer having a JIS-A hardness of 69, 100 parts by weight of polyhedral MgO·ZnO·H$_2$O (average particle diameter, 1.0 $\mu$m; aspect ratio, 4), and 25 parts by weight of ethylenebispentabromodiphenyl by means of Labo Plastomill equipped with roller type blades (manufactured by Toyo Seiko Seisaku-Sho, Ltd.) at a temperature of 180°C. Subsequently, the resultant mixture was formed into a sheet having a thickness of 0.5 mm and a diameter of 80 mm with a hot platen press heated at 180°C. This sheet was placed in a pressure vessel and held in a 150°C carbon dioxide gas atmosphere for 10 minutes at an elevated pressure of 15 MPa to thereby impregnate the sheet with carbon dioxide. After 10 minutes, the pressure was abruptly lowered to obtain an expanded material comprising the olefin polymers. This expanded material had a relative density of 0.077, an average cell diameter of 80 $\mu$m, and a 50%-compression load of 2.34 N/cm$^2$.

EXAMPLE 9

Fifty parts by weight of polypropylene having a density of 0.9 g/cm$^3$ and a 230°C melt flow rate of 4 was kneaded together with 50 parts by weight of an ethylene/propylene elastomer having a JIS-A hardness of 69, and 100 parts by weight of polyhedral MgO·ZnO·H$_2$O (average particle diameter, 0.5 $\mu$m; aspect ratio, 4) by means of Labo Plastomill equipped with roller type blades (manufactured by Toyo Seiko Seisaku-Sho, Ltd.) at a temperature of 180°C. Subsequently, the resultant mixture was formed into a sheet having a thickness of 0.5 mm and a diameter of 80 mm with a hot platen press heated at 180°C. This sheet was placed in a pressure vessel and held in a 150°C carbon dioxide gas atmosphere for 10 minutes at an elevated pressure of 15 MPa to thereby impregnate the sheet with carbon dioxide. After 10 minutes, the pressure was abruptly lowered to obtain an expanded material comprising the olefin polymers. This expanded material had a relative density of 0.052, an average cell diameter of 103 $\mu$m, a cell density of 1.66 x 10$^6$, and a 50%-compression load of 2.61 N/cm$^2$.

COMPARATIVE EXAMPLE 4

Polyurethane foam Inoac Type SC, produced by a general chemical expansion technique, had a relative density of 0.071, an average cell diameter of 480 $\mu$m, and a 50%-compression load of 0.70 N/cm$^2$.

EVALUATION

The expanded materials obtained or examined in Examples 7 to 9 and Comparative Example 4 given above were evaluated for flame retardancy and acoustic properties by the following methods for flame retardancy evaluation and acoustic property evaluation. The results obtained are shown in Table 3.

Method for Flame Retardancy Evaluation:

The expanded materials of Examples 7 to 9 and Comparative Example 4 each was sliced to obtain a sample piece having a thickness of 1 mm. These samples were evaluated for flame retardancy in accordance with the UL 94 HF-1 standard. The results obtained are shown in Table 3, in which the samples which bore the standard test are indicated by "acceptable" and that which did not bear the test is indicated by "unacceptable". Method for Acoustic Property Evaluation:

The expanded materials of Examples 7 to 9 and Comparative Example 4 given above were examined for the characteristic impedance of the material to determine the ratio of this characteristic impedance to the characteristic impedance of air $[Z_c^{mat.}/(\rho^{air} \times C^{air})]$ (unit: dimensionless). The acoustic properties of each expanded material were evaluated in terms of soundproofing properties.

The measurement of characteristic impedance was made with a two-microphone impedance meter at a frequency of 2,000 Hz. In each found value, the decimal fraction was neglected and only the whole number was used.

Table 3

|  | Flame retardancy | Acoustic property $Z_c^{mat.}/(\rho^{air} \times c^{air})$ |
|---|---|---|
| Example 7 | Acceptable | 15.4 |
| Example 8 | Acceptable | 6.92 |
| Example 9 | Acceptable | 4.17 |
| Comparative Example 4 | Unacceptable | 2.66 |

As apparent from Table 3, the soundproofing materials which respectively were the expanded materials obtained in the Examples according to the invention had better flame retardancy and a higher characteristic impedance than the soundproofing material which was the expanded material of the Comparative Example.

**Claims**

**1.** A microporous soundproofing material formed through the step of impregnating a mixture with an inert gas at a high pressure and then decompressing the impregnated mixture, **caracterized in that** the mixture comprises a thermoplastic elastomer and a thermoplastic polymer which is not a thermoplastic elastomer.

2. The microporous soundproofing material of claim 1, which is constituted of an expanded material formed through the step of impregnating an unexpanded molding comprising a mixture comprising a thermoplastic elastomer and a thermoplastic polymer which is not a thermoplastic elastomer with an inert gas at a high pressure and then decompressing the impregnated molding.

3. The microporous soundproofing material of claim 1, which is constituted of an expanded material formed by impregnating a molten mixture comprising a thermoplastic elastomer and a thermoplastic polymer which is not a thermoplastic elastomer with an inert gas at a high pressure and then subjecting the impregnated elastomer to molding simultaneously with decompression.

4. The microporous soundproofing material of claim 1, wherein the expanded material constituting the soundproofing material has undergone heating after the decompression.

5. The microporous soundproofing material of claim 1, wherein the inert gas is carbon dioxide.

6. The microporous soundproofing material of claim 1, wherein the inert gas is in a supercritical state during the impregnation.

7. The microporous soundproofing material of claim 1, wherein the inert gas has a pressure of 10 MPa or higher during the impregnation.

8. The microporous soundproofing material of claim 1, wherein the expanded material constituting the soundproofing material has closed cells having an average cell diameter of from 0.1 to 300 $\mu$m evenly distributed throughout the whole inner parts thereof and has a cell density of from $10^5$ to $10^{14}$ cells per $cm^3$.

9. The microporous soundproofing material of claim 1, wherein the expanded material constituting the soundproofing material has closed cells having an average cell diameter of from 0.1 to 20 $\mu$m evenly distributed throughout the whole inner parts thereof and has a cell density of from $3x10^8$ to $10^{14}$ cells per $cm^3$.

10. The microporous soundproofing material of claim 1, wherein the expanded material constituting the soundproofing material has a relative density of 0.6 or lower.

11. The microporous soundproofing material of claim 1, wherein the expanded material constituting the soundproofing material has a compressive load at 50% compression of 20 $N/cm^2$ or lower.

12. The microporous soundproofing material of claim 1, wherein the expanded material constituting the soundproofing material contains a flame retardant.

13. The microporous soundproofing material of claim 12, wherein the flame retardant comprises a hydrated metal compound, a bromine compound or a mixture thereof.

14. The microporous soundproofing material of claim 13, wherein the hydrated metal compound is a composite metal hydroxide represented by formula (1):

$$m(M_aO_b)\cdot n(Q_dO_e)\cdot cH_2O \qquad (1)$$

wherein M and Q represent different metal elements and Q is a metal element belonging to a group selected from Groups IVa, Va, VIa, VIIa, VIII Ib and IIb of the periodic table; and m, n, a, b, c, d, and e may be the same or different and each is a positive number.


**Patentansprüche**

1. Ein mikroporöses Schallschutzmaterial, gebildet durch den Schritt des Imprägnierens einer Mischung mit einem inerten Gas bei hohem Druck, und anschließender Dekompression der imprägnierten Mischung, **dadurch** charakterisiert, dass

die Mischung ein thermoplastisches Elastomer und ein thermoplastisches Polymer umfasst, welches kein thermoplastisches Elastomer ist.

2. Das mikroporöse Schallschutzmaterial gemäß Anspruch 1, welches aus einem expandiertem Material konstituiert ist, gebildet durch den Schritt des Imprägnierens eines nicht-expandierten Presslings, umfassend eine Mischung, welche ein thermoplastisches Elastomer und ein thermoplastisches Polymer, welches kein thermoplastisches Elastomer ist, umfasst, mit einem inerten Gas bei hohem Druck, und anschließender Dekompression des imprägnierten Presslings.

3. Das mikroporöse Schallschutzmaterial gemäß Anspruch 1, welches aus einem nicht-expandiertem Material konstituiert ist, gebildet durch Imprägnieren einer geschmolzenen Mischung, welche ein thermoplastisches Elastomer und ein thermoplastisches Polymer, welches kein thermoplastisches Elastomer ist, umfasst, mit einem inerten Gas bei hohem Druck, und anschließender Unterwerfung des imprägnierten Elastomers zum Formschmelzen bei gleichzeitiger Dekompression.

4. Das mikroporöse Schallschutzmaterial gemäß Anspruch 1, worin das expandierte Material, welches das Schallschutzmaterial bildet, nach der Dekompression einer Wärmebehandlung unterzogen wurde.

5. Das Schallschutzmaterial gemäß Anspruch 1, worin das inerte Gas Kohlendioxid ist.

6. Das mikroporöse Schallschutzmaterial gemäß Anspruch 1, worin das inerte Gas während der Imprägnierung in einem super kritischen Zustand ist.

7. Das mikroporöse Schallschutzmaterial gemäß Anspruch 1, worin das inerte Gas einen Druck von 10 MPa oder mehr während der Imprägnation hat.

8. Das mikroporöse Schallschutzmaterial gemäß Anspruch 1, worin das expandierte Material, welches das Schallschutzmaterial bildet, geschlossene Zellen mit einem durchschnittlichen Zelldurchmesser von 0,1 bis 300 $\mu$m hat, gleichmäßig in den gesamten inneren Teilen verteilt, und eine Zelldichte von $10^5$ bis $10^{14}$ Zellen pro $cm^3$ hat.

9. Das mikroporöse Schallschutzmaterial gemäß Anspruch 1, worin das expandierte Material, welches das Schallschutzmaterial bildet, geschlossener Zellen mit einem durchschnittlichen Zelldurchmesser von 0,1 bis 20 $\mu$m hat, gleichmäßig in den gesamten inneren Teilen verteilt, und eine Zelldichte von $3 \times 10^8$ bis $10^{14}$ Zellen pro $cm^3$ hat.

10. Das mikroporöse Schallschutzmaterial gemäß Anspruch 1, worin das expandierte Material, welches das Schallschutzmaterial bildet, eine relative Dichte von 0,6 oder weniger hat.

11. Das mikroporöse Schallschutzmaterial gemäß Anspruch 1, worin das expandierte Material, welches das Schallschutzmaterial bildet, eine Kompressionslast bei 50% Kompression von 20 $N/cm^2$ oder weniger hat.

12. Das mikroporöse Schallschutzmaterial gemäß Anspruch 1, worin das expandierte Material, welches das Schallschutzmaterial bildet, ein flammhemmendes Mittel enthält.

13. Das mikroporöse Schallschutzmaterial gemäß Anspruch 12, worin das flammhemmende Mittel eine hydratisierte Metallverbindung, eine Bromidverbindung oder eine Mischung davon umfasst.

14. Das mikroporöse Schallschutzmaterial gemäß Anspruch 13, worin die hydratisierte Metallverbindung ein Metallhydroxidkomposit gemäß der Formel (1) ist:

$$M(M_aO_b) \cdot n(Q_dO_e) \cdot cH_2O \qquad (1)$$

worin M und Q verschiedene Metallelemente sind und Q ein Metallelement der Gruppe ausgewählt aus den Gruppen IVa, Va, VIa, VIIa, VIII, Ib und IIb des Periodensystems ist; und m, n, a, b, c, d und e sind gleich oder verschieden und ist jeweils eine positive Zahl.

**Revendications**

1. Matériau microporeux pour isolation acoustique formé par l'intermédiaire d'une étape d'imprégnation d'un mélange avec un gaz inerte à une pression élevée et ensuite la décompression du mélange imprégné, **caractérisé en ce que** le mélange comprend un élastomère thermoplastique et un polymère thermoplastique qui n'est pas un élastomère thermoplastique.

2. Matériau microporeux pour isolation acoustique selon la revendication 1, qui est constitué d'un matériau expansé formé par l'intermédiaire d'une étape d'imprégnation d'un article moulé non expansé comprenant un mélange comprenant un élastomère thermoplastique et un polymère thermoplastique qui n'est pas un élastomère thermoplastique avec un gaz inerte à une pression élevée et ensuite la décompression du produit moulé imprégné.

3. Matériau microporeux pour isolation acoustique selon la revendication 1, qui est constitué d'un matériau expansé formé par imprégnation d'un mélange fondu comprenant un élastomère thermoplastique et un polymère thermoplastique qui n'est pas un élastomère thermoplastique avec un gaz inerte à une pression élevée et ensuite en soumettant l'élastomère imprégné à un moulage simultanément avec une décompression.

4. Matériau microporeux pour isolation acoustique selon la revendication 1, dans lequel le matériau expansé constituant le matériau pour isolation acoustique a subi un chauffage après la décompression.

5. Matériau microporeux pour isolation acoustique selon la revendication 1, dans lequel le gaz inerte est le dioxyde de carbone.

6. Matériau microporeux pour isolation acoustique selon la revendication 1, dans lequel le gaz inerte est dans un état supercritique pendant l'imprégnation.

7. Matériau microporeux pour isolation acoustique selon la revendication 1, dans lequel le gaz inerte a une pression de 10 MPa ou supérieure pendant l'imprégnation.

8. Matériau microporeux pour isolation acoustique selon la revendication 1, dans lequel le matériau expansé constituant le matériau pour isolation acoustique a des cellules fermées ayant un diamètre cellulaire moyen de 0,1 à 300 $\mu$m distribuées uniformément dans la totalité de ses parties internes et a une densité cellulaire de $10^5$ à $10^{14}$ cellules par $cm^2$.

9. Matériau microporeux pour isolation acoustique selon la revendication 1, dans lequel le matériau expansé constituant le matériau pour isolation acoustique a des cellules fermées ayant un diamètre cellulaire moyen de 0,1 à 20 $\mu$m distribuées uniformément dans la totalité de ses parties internes et a une densité cellulaire de $3 \times 10^8$ à $10^{14}$ cellules par $cm^2$.

10. Matériau microporeux pour isolation acoustique selon la revendication 1, dans lequel le matériau expansé constituant le matériau pour isolation acoustique a une densité relative de 0,6 ou inférieure.

11. Matériau microporeux pour isolation acoustique selon la revendication 1, dans lequel le matériau expansé constituant le matériau pour isolation acoustique a une charge compressive à 50 % de compression de 20 N/$cm^2$ ou inférieure.

12. Matériau microporeux pour isolation acoustique selon la revendication 1, dans lequel le matériau expansé constituant le matériau pour isolation acoustique contient un agent ignifugeant.

13. Matériau microporeux pour isolation acoustique selon la revendication 12, dans lequel l'agent ignifugeant comprend un composé métallique hydraté, un composé bromé ou un mélange de ceux-ci.

14. Matériau microporeux pour isolation acoustique selon la revendication 13, dans lequel le composé métallique hydraté est uhn hydroxyde métallique composite représenté par la formule (1) :

$$m(M_aO_b) \cdot n(Q_dO_e) \cdot cH_2O \qquad (1)$$

dans laquelle M et Q représentent des éléments métalliques différents et Q est un élément métallique appartenant à un groupe choisi parmi les groupes IVa, Va, Via, VIIa, VIII Ib et IIb du tableau périodique ; et m, n, a, b, c, d et e peuvent être identiques ou différents et chacun est un nombre positif.